# EUROPÄISCHE PATENTSCHRIFT

(11) **EP 1 110 848 B1**
(45) Veröffentlichungstag und Bekanntmachung des Hinweises auf die Patenterteilung: **01.09.2004**
(21) Anmeldenummer: 00127042.0
(22) Anmeldetag: 09.12.2000
(51) Int. Cl.: B62D 21/11

(54) **Längslenkerbock in Nutzfahrzeugen**
Trailing arm frame in commercial vehicles
Onsole de bras oscillant longitudinal dans véhicules industriels

(30) Priorität: 21.12.1999 DE 19961669
(43) Veröffentlichungstag der Anmeldung: 27.06.2001
(73) Patentinhaber: MAN Nutzfahrzeuge Aktiengesellschaft, 80976 München (DE)
(72) Erfinder: Übelacker, Andreas, Dipl.-Ing., 82282 Unterschweinbach (DE); Schädle, Markus, Dipl.-Ing.(FH), 85221 Dachau (DE); Stummer, Josef, Dipl.-Ing., 85716 Unterschleissheim (DE)

(56) Entgegenhaltungen:
- DE-A- 1 405 211
- FR-A- 2 063 097

## Beschreibung

Die Erfindung betrifft einen Längslenkerbock an Rahmenlängsträgem von Nutzfahrzeugen gemäß dem Oberbegriff des Anspruches 1.

Aus der DE 299 02 471 U1 ist die Lagerung eines einen Torsionsstab aufweisenden Stabilisators mit einem Lagergehäuse bekannt, welches mit einem Fahrzeugträger verbunden ist. In dem Lagergehäuse ist ein elastischer Lagerkörper angeordnet, der stoffschlüssig mit dem Torsionsstab verbunden ist und formschlüssig unter Ausbildung einer radialen Vorspannung in axialer Richtung in das Lagergehäuse einsetzbar ist. Die Außenfläche des Lagerkörpers und die Innenfläche des Lagergehäuses weisen in Längsrichtung der Lagerung orientierte Vertiefungen oder Vorsprünge auf, die in Umfangsrichtung in formschlüssige Verbindung treten. Das Lagergehäuse weist mindestens ein Zentrierelement auf, welches korrespondierend zu dem Fahrzeugträger zugeordneten Zentrierelementen ausgebildet ist.

Aus der DE 44 27 172 A1 ist eine Radaufhängung, insbesondere eine Hinterachsaufhängung für Nutzfahrzeuge bekannt. Die Radaufhängung hat eine über untere und obere Längsträger geführte, luftgefederte Starrachse, bei der die Längslenker in Fahrtrichtung vor der Achse liegen und bei der die unteren Längslenker an ihren vorderen Enden an rahmenfesten Konsolen gehalten sind. Die unteren Längslenker sind durch zwischen den Konsolen und dem Starrachskörper verlaufende Blattfederlenker gebildet. Die oberen Längslenker sind durch die Arme eines Stabilisators gebildet, deren vordere Armenden über einen rahmenseitig gelagerten Torsionsstab verbunden sind. Zur Querabstützung des Achskörpers sind Stützglieder vorgesehen, die in Höhe der oberen Längslenker den Achskörper in Fahrzeugquerrichtung nachgiebig gegen die Rahmenlängsträger des Fahrzeugrahmens abstützen.

Aus der DE 198 09 279 A1 ist ein Fahrgestell eines schweren Nutzfahrzeuges mit einem Rahmen bekannt, dessen beide Längsträger über mehrere Querträger miteinander verbunden sind. Von den mehreren Achsen des Fahrgestells ist wenigstens eine als Starrachse ausgebildet, welche nach Art einer selbststabilisierenden Verbundlenkerachse dargestellt ist.

Die Starrachse ist dergestalt konstruiert, daß zu ihrer Querführung nur der Panhardstab notwendig ist und sie ohne den bisher bei schweren Nutzfahrzeugen zur Beschränkung des Wankens notwendigen U-förmigen Stabilisator auskommt. Statt dessen ist die Funktion eines ansonsten üblichen Stabilisators einem Bauteilverbund aufgeprägt, welcher sich aus dem Starrachskörper und den beiden an diesem befestigten Längslenkern zusammensetzt. Entsprechend dem Starrachskörper sind ebenfalls die beiden Längslenker in die Stabilisatorfunktion mit eingebunden und dementsprechend ausgebildet.

Die Gattungsbildende FR 2 063 097 zeigt einen unterhalb eines Längsträgers eines Fahrzeuges schwimmend angeordneten Tragbock, welcher sich über Dämpfungselemente gegen die Längsträger eines Fahrzeugrahmens abstützt und der mit einer von einem Blattfederpaket federn abgestützten Fahrerhausachse verbunden ist. Der Tragbock ist an seiner Unterseite mit dem Blattfederpaket verbunden und stützt sich in Fahrtrichtung über einen Längslenker gelenkig gegenüber einem fest mit dem Längsträger des Fahrzeugrahmens verbundenen Haltebock ab. Zusätzlich hierzu weist der Tragbock ein hiervon abragendes Gelenk auf, an dem ein Ende eines Stabilisators angeordnet ist.

Es ist Aufgabe der Erfindung, die Abstützung eines Stabilisators bei einem Nutzfahrzeug zu optimieren.

Diese Aufgabe wird erfindungsgemäß durch die Merkmale des Anspruches 1 gelöst.

Der erfindungsgemäße Längslenkerbock zeichnet sich dadurch aus, dass dieser neben der Führung der Fahrzeugachsen über die an ihm angelenkten Längs- und Dreieckslenker zusätzlich zur Lagerung von vorgesehenen Stabilisatoren ausgebildet ist. Somit kann in vorteilhafter Weise eine kompakte, raumsparende Bauweise erzielt werden, wodurch kostenreduziert Bauteile einsparbar sind.

Der Längslenkerbock weist wenigstens eine Ausmuldung zur wenigstens teilweisen, umfangsmäßig umgreifenden Aufnahme des endseitigen Bereiches eines Torsionsabschnittes eines quer zur Fahrtrichtung verlaufenden Stabilisators auf. Zur Befestigung des jeweiligen Stabilisators am Längslenkerbock wirkt die Ausmuldung mit einer den endseitigen Bereich des Torsionsabschnittes des Stabilisators bereichsweise umgreifenden Haltemuffe zusammen.

Die die endseitigen Bereiche des Torsionsabschnittes bereichsweise umgreifenden Haltemuffen können mittels Verschraubungen oder dergleichen am jeweiligen Längslenkerbock befestigbar sein.

Der erfindungsgemäße Längslenker bietet den Vorteil, dass er zusätzlich zum Aufweisen einer kompakten Bauweise mehrere Funktionen, nämlich Achsführung, Aufnahme der Stützkräfte und Verschraubung mit Rahmenlängs- und Querträger übemimmt und die entstehenden Kräfte optimal aufnimmt und auf direktem Weg in den Fahrzeugrahmen einleitet. Der Bereich des Rahmenendes kann somit weniger massiv ausfallen. Durch die Anordnung der Stabilisatoren unterhalb der Rahmenlängsträger können diese, bedingt durch ihre große Schenkellänge, trotz ihres relativ großen Durchmessers weich ansprechen.

Gemäß einer weiteren Ausgestaltung der Erfindung kann der Stabilisator im Bereich seiner Fixierung umfangsmäßig von einem ringförmigen Dämpfungselement umschlossen sein, welches von den zusammenwirkenden Ausmuldungen des Längslenkerbockes und der Haltemuffen ringförmig umgriffen ist. Das ringförmige Dämpfungselement kann entweder stoffschlüssig mit dem Stabilisator oder den Ausmuldungen des Längslenkerbockes und den Haltemuffen gebildet sein, oder durch ein separat zu montierendes, gegebenenfalls mehrteilig ausgebildetes und komplettierbares Bauteil gebildet sein.

Gemäß einer weiteren Ausgestaltung der Erfindung können die die Stabilisatoren am Längslenkerbock lagernd aufnehmenden Ausmuldungen unterhalb der mit den Längslenkerböcken verbundenen Rahmenlängsträgern angeordnet sein, so dass die quer zur Fahrtrichtung verlaufenden Torsionsabschnitte der Stabilisatoren unterhalb der Rahmenlängsträger verlaufen.

Gemäß einer weiteren Ausgestaltung der Erfindung können die in Fahrtrichtung verlaufenden Hebelarmabschnitte der Stabilisatoren eine lange Schenkellänge aufweisen, so dass nur vergleichsweise geringe Abstützkräfte an den Enden der Hebelarmabschnitte aufgenommen werden müssen. Des weiteren können die Hebelarmabschnitte der Stabilisatoren so angeordnet und geführt sein, dass in vorteilhafter Weise ein Randschatten des Fahrzeuges nicht überragt wird. Mit der Gestaltungsmöglichkeit einer kompakten Anordnung der Bauteile am Längslenkerbock wird in vorteilhafter Weise ein Hineinragen dieser Bauteile in den Bewegungsbereich der Fahrzeugräder vermieden.

Gemäß einer weiteren Ausgestaltung der Erfindung kann der Längslenkerbock wenigstens an Vertikalstegen der Rahmenlängsträger mittels Verschraubungen befestigt sein. Der Längslenkerbock kann zusätzlich mit Rahmenquerträgem fest verbunden sein.

Gemäß einer weiteren Ausgestaltung der Erfindung kann der Längslenkerbock einem Doppelaggregat eines Nutzfahrzeuges zugehörig sein. Weitere vorteilhafte Ausgestaltungen und zweckmäßige Fortbildungen des erfindungsgemäßen Längslenkerbockes sind aus den nachstehenden Beispielsbeschreibungen an Hand der Zeichnung näher entnehmbar.

In der Zeichnung zeigen:
- Fig. 1: in perspektivischer Darstellung ein Doppelachsaggregat eines Nutzfahrzeuges,
- Fig. 2: ein Doppelachsaggregat gemäß Fig. 1 in Draufsicht,
- Fig. 3: ein Doppelachsaggregat gemäß Fig. 1 in Seitenansicht,
- Fig. 4: ausschnittsweise einen an einem Rahmenlängsträger eines Nutzfahrzeuges anordbaren Längslenkerbock mit hieran befestigten Stabilisatoren in perspektivischer Darstellung,
- Fig. 5: einen Längslenkerbock gemäß Fig. 4 in Seitenansicht und
- Fig. 6: einen Längslenkerbock gemäß Fig. 4 in Draufsicht.

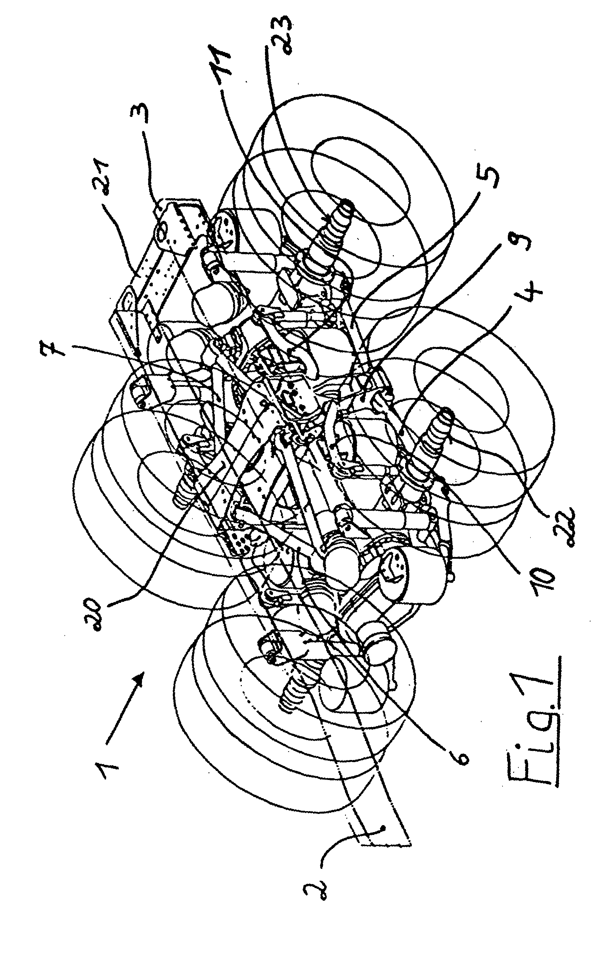

In Fig. 1 ist in perspektivischer Darstellung ein Doppelachsaggregat 1 eines Nutzfahrzeuges gezeigt. Das Doppelachsaggregat 1 ist in dem hier gezeigten Ausführungsbeispiel endseitig eines Fahrzeugrahmens angeordnet, welcher unter anderem aus Rahmenlängsträgem 2, 3 und Querträgern, wie beispielsweise einem Querträger 20 und einem Schlußquerträger 21 zusammengesetzt ist.

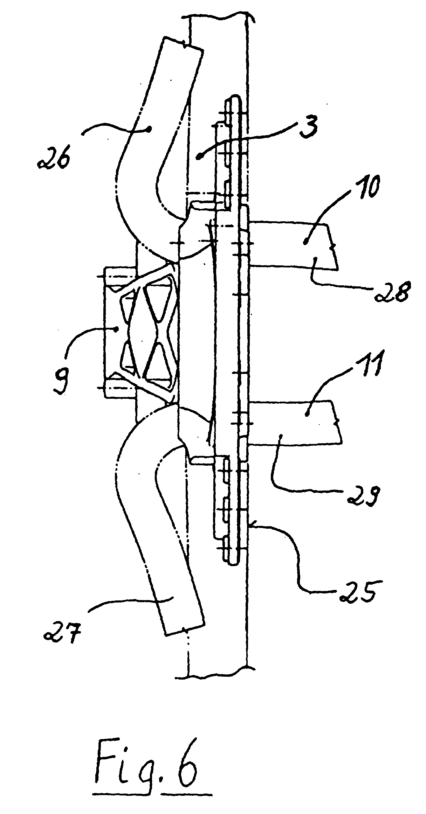

Im Bereich der Anbindung des Querträgers 20 an die beiden Rahmenlängsträger 2, 3 sind Längslenkerböcke 8, 9 zur Abstützung und Lagerung von vorderen und hinteren Längs- 4, 5 und Dreieckslenkern 6, 7 angeordnet. Die niveaumäßig unterhalb der Rahmenlängsträger 2, 3 angeordneten vorderen und hinteren Dreieckslenker 6, 7 sind je Fahrzeugseite im Verbund mit dem Querträger 20 fahrzeuginnenseitig mit den Längslenkerböcken 8, 9 gelenkig verbunden. Die niveaumäßig unterhalb der Rahmenlängsträger 2, 3 und der Dreieckslenker 6, 7 angeordneten vorderen und hinteren Längslenker 4, 5 sind in einem unteren Bereich der Längslenkerböcke 8, 9 einenendes gelenkig angebunden. Anderenendes sind die vorderen und hinteren Längslenker 4, 5 gelenkig an den jeweiligen Achskörpern 22, 23 angebunden (Fig. 3). Des weiteren sind an den Längslenkerböcken 8, 9 vordere und hintere Stabilisatoren 10, 11 angeordnet, deren quer zur Fahrtrichtung verlaufende Torsionsabschnitte 29, 29 dicht unterhalb der Rahmenlängsträger 2, 3 verlaufen. Die in Fahrtrichtung weisenden Hebelarmabschnitte 26, 27 der jeweiligen Stabilisatoren 10, 11 sind endseitig an mit den Achskörpern 22, 23 in Verbindung stehenden Stabilisatorstützen 18, 19 gelenkig verbunden (Fig. 3, Fig. 4).

Alternativ zu dem in Fig. 1 gezeigten Doppelachsaggregat können die die Stabilisatoren 10, 11 erfindungsgemäß aufnehmenden Längslenkerböcke 8, 9 prinzipiell für eine Einzelachse vorgesehen und augebildet sein.

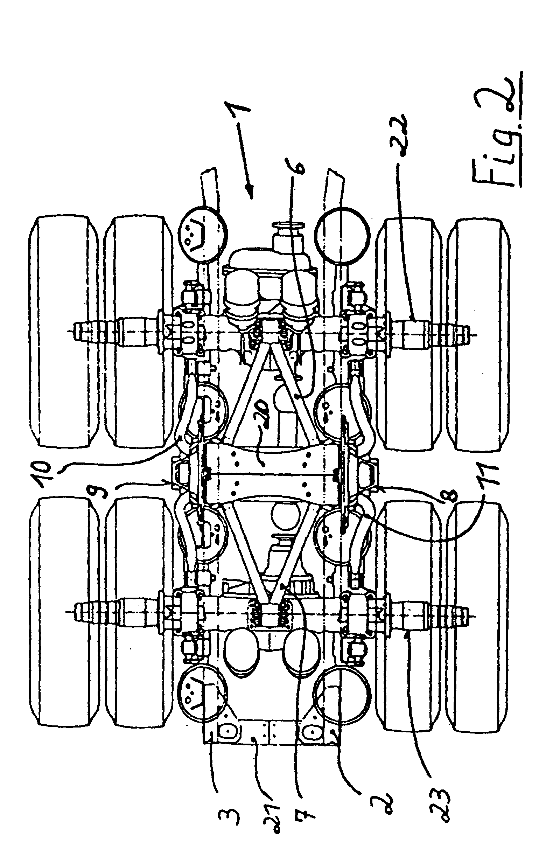

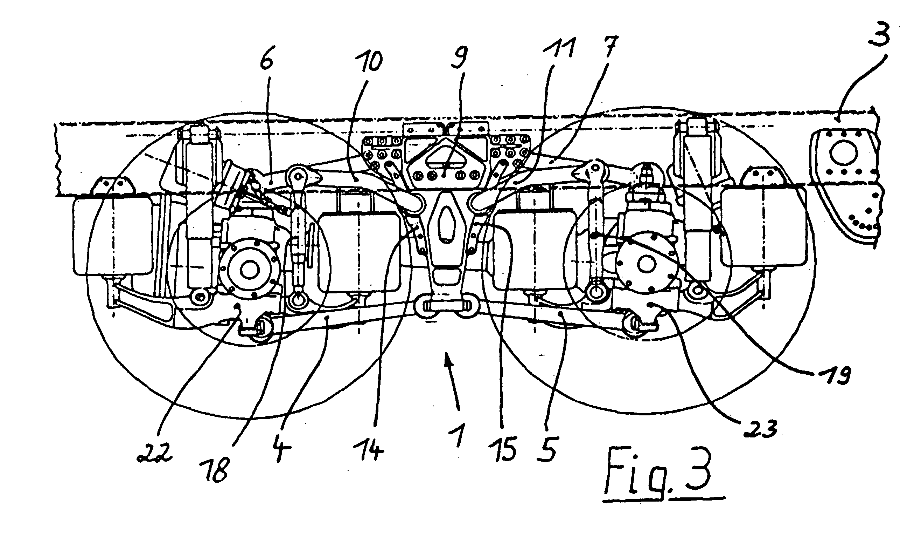

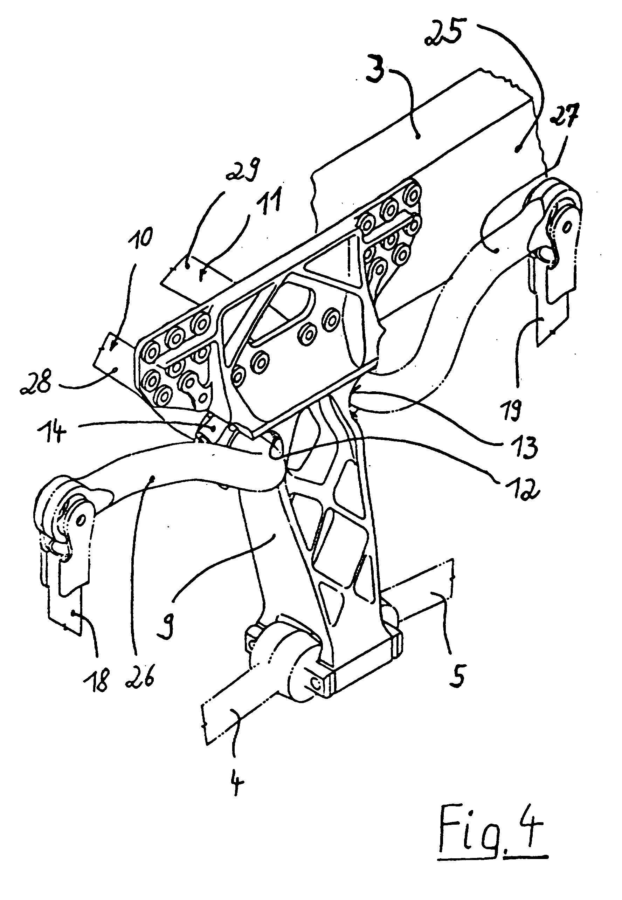

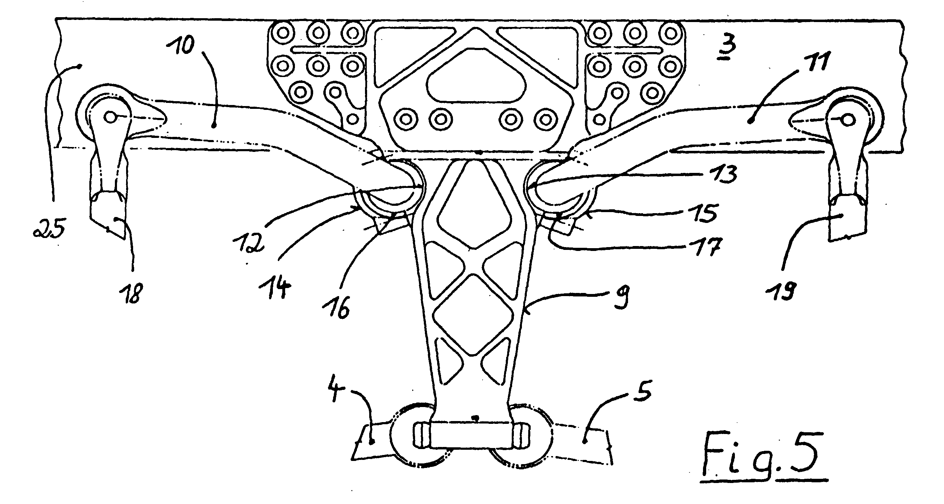

In Fig. 2 ist das Doppelachsaggregat 1 gemäß Fig. 1 in Draufsicht gezeigt. Der Rahmen des Nutzfahrzeuges setzt sich unter anderem aus den Rahmenlängsträgem 2, 3 sowie Querträgem, wie beispielsweise dem Querträger 20 und dem Schlussquerträger 21 zusammen. Im Bereich zwischen den beiden Achskörpem 22, 23 sind die Längslenkerböcke 8, 9 sowohl an den Rahmenlängsträgem 2, 3 als auch an dem Querträger 20 über hier nicht gezeigte Befestigungsmittel angebracht. Zusätzlich zur Lagerung der oberen Dreieckslenker 6, 7 und der hier nicht gezeigten unteren Längslenker sindi die Stabilisatoren 10, 11 an den Längslenkerböcken 8, 9 gelenkig gehaltert.

In Fig. 3 ist das Doppelachsaggregat 1 gemäß Fig. 1 in Seitenansicht gezeigt.

In Fig. 4 ist in perspektivischer Darstellung der rechte Längslenkerbock 9 mit den an ihm angelenkten und befestigten Stabilisatoren 10, 11 und Längslenkern 4, 5 gezeigt. Der an einem Vertikalsteg 25 des rechten Rahmenlängsträgers 3 angeordnete Längslenkerbock 9 weist in einem Bereich niveaumäßig dicht unterhalb des Rahmenlängsträgers 3 angeordnete, zur Aufnahme der Torisonsabschnitte der jeweiligen Stabilisatoren 10, 11 vorgesehene vordere und hintere Ausmuldungen 12, 13 auf. Die jeweiligen Ausmuldungen 12, 13 bilden im Zusammenwirken mit in diesem Bereich vorgesehenen Haltemuffen 14, 15 (Fig. 5) eine ringförmige, formschlüssige Aufnahme und Befestigung für die Endbereiche der Torsionsabschnitte 28, 29 der jeweiligen Stabilisatoren 10, 11.

In Fig. 5 ist der am rechten Rahmenlängsträger 3 befestigte rechte Längslenkerbock 9 in Seitenansicht gezeigt. Die die ringförmige, formschlüssige Aufnahme für die Torsionsabschnitte 28, 29 der jeweiligen Stabilisatoren 10, 11 bildenden Haltemuffen 14, 15 und Ausmuldungen 12, 13 sind in dem gezeigten Ausführungsbeispiel über hier nicht näher bezeichnete Befestigungsmittel, beispielsweise Verschraubungen miteinander verbunden. Dabei sind zwischen den von Haltemuffen 14, 15 und Ausmuldungen 12, 13 gebildeten Aufnahmen und den hierin gehalterten Stabilisatoren 10, 11 diese umschließende Dämpfungselemente 16, 17 vorgesehen. Diese Dämpfungselemente 16, 17 können ringförmig ausgeführt sein und beispielsweise stoffschlüssig mit dem Torsionsabschnitt der Stabilisatoren 10, 11 verbunden sein.

Alternativ hierzu ist es möglich, die ringförmigen Dämpfungselemente 16, 17 durch halbschalenförmig ausgeführte, zu einer Ringaufnahme komplettierbare Kunststof felemente auszubilden, welche als separat zu montierende Bauteile ausgeführt sind.

In Fig. 6 ist ein rechter Längslenkerbock 9 gemäß Fig. 1 in Draufsicht gezeigt. Der Längslenkerbock 9 ist über hier nicht näher ausgeführte Befestigungsmittel, beispielsweise Verschraubungen oder dergleichen am Vertikalsteg 25 des rechten Rahmenlängsträgers 3 angeordnet. Unterhalb dieses Rahmenlängsträgers 3 ist je ein vorderer und ein hinterer Stabilisator 10, 11 vom Längslenkerbock 9 fixierend aufgenommen. Der hier dargestellte Rahmenlängsträger 3 weist zur Fahrzeugaußenseite hin ausgerichtete - nicht mit Bezugszeichen versehene - Horizontalstege auf. Die Torsionsabschnitte 28, 29 verlaufen unterhalb des Rahmenlängsträgers 3, wobei die Hebelarmabschnitte 26, 27 der Stabilisatoren 10, 11 vorteilhafterweise in etwa in einem Umgebungsbereich längs des Rahmenlängsträgers 3 verlaufend geführt und abgestützt sind.

## Patentansprüche

1. Längslenkerbock an Rahmenlängsträgern (2,3) von Nutzfahrzeugen mit Mitteln zur Abstützung und Lagerung von Längslenkern (4,5) sowie wenigstens eines Stabilisators (10,11), **dadurch gekennzeichnet, dass** der Längslenkerbock (8,9) Mittel zur Abstützung und Lagerung von Dreieckslenkern und wenigstens eine Ausmuldung (12,13) zur bereichsweise umgreifenden Aufnahme des endseitigen Bereiches eines Torsionsabschnittes (28,29) des wenigstens einen, quer zur Ausmuldung (12,13) verlaufenden Stabilisators (10,11) aufweist, wobei zur Befestigung des jeweiligen Stabilisators (10,11) am Längslenkerbock (8,9) die Ausmuldung (12,13) mit einer den Stabilisator (10,11) bereichsweise umgreifenden Haltemuffe (14,15) zusammenwirkt.

2. Längslenkerbock nach Anspruch 1, **dadurch gekennzeichnet, dass** der Stabilisator (10, 11) im Bereich seiner Fixierung umfangsmäßig von einem ringförmigen Dämpfungselement (16,17) umschlossen ist, welches von den zusammenwirkenden Ausmuldungen (12,13) des Längslenkerbockes (8,9) und der Haltemuffen (14,15) ringförmig umgriffen ist.

3. Längslenkerbock nach einem der Ansprüche 1 und 2, **dadurch gekennzeichnet, dass** die die Stabilisatoren (10,11) am Längslenkerbock (8,9) lagernd aufnehmenden Ausmuldungen (12, 13) unterhalb der mit den Längslenkerböcken (8,9) verbundenen Rahmenlängsträger (2,3) angeordnet sind, so dass die quer zur Fahrtrichtung verlaufenden Torsionsabschnitte ( 28,29) der Stabilisatoren (10,11) unterhalb der Rahmenlängsträger (2,3) verlaufen.

4. Längslenkerbock nach einem der Ansprüche 1 bis 3, **dadurch gekennzeichnet, dass** die in Fahrtrichtung verlaufenden Hebelarmabschnitte (26,27) der Stabilisatoren (10,11) eine lange Schenkellänge aufweisen, und dass die Hebelarmabschnitte (26,27) der Stabilisatoren (10,11) einen Randschatten des Fahrzeuges nicht überragen.

5. Längslenkerbock nach einem der Ansprüche 1 bis 4, **dadurch gekennzeichnet, dass** der Längslenkerbock (8,9) wenigstens an Vertikalstegen (25) der Rahmenlängsträger (2,3) mittels Verschraubungen befestigt ist, und dass der Längslenkerbock (8,9 zusätzlich mit Rahmenquerträgem (20) fest verbunden ist.

6. Längslenkerbock nach einem der Ansprüche 1 bis 5, **dadurch gekennzeichnet, dass** der Längslenkerbock (8,9) einem Doppelachsaggregat (1) eines Nutzfahrzeuges zugehörig ist.

## Claims

1. Longitudinal arm bracket on the frame longitudinal members (2, 3) in commercial vehicles with means for supporting and bearing longitudinal arms (4, 5) and at least one stabiliser (10, 11), **characterised in that** the longitudinal arm bracket (8, 9) is provided with means for supporting and bearing A-arms and with at least one recess (12, 13) for the partially encompassing support of the end area of a torsion section (28, 29) of the at least one stabiliser (10, 11) arranged in transverse direction relative to the recess (12, 13), whereby for fastening the respective stabiliser (10, 11) to the longitudinal arm bracket (8, 9) the recess (12, 13) acts together with a holding sleeve (14, 15) which partially encompasses the stabiliser (10, 11).

2. Longitudinal arm bracket according to Claim 1, **characterised in that** in the area where it is fixed the stabiliser (10, 11) is circumferentially encompassed by a ring-type damping element (16, 17) enclosed in a ring-type manner by the interacting recesses (12, 13) of the longitudinal arm bracket (8, 9) and of the holding sleeves (14, 15).

3. Longitudinal arm bracket according to one of the Claims 1 and 2, **characterised in that** the recesses (12, 13) holding the stabilisers (10, 11) on the longitudinal arm bracket (8, 9) are arranged below the frame longitudinal members (2, 3) connected with the longitudinal arm brackets (8, 9) so that torsion sections (28, 29) of the stabilisers (10, 11) extend in transverse direction relative to the driving direction and below the frame longitudinal members (2, 3).

4. Longitudinal arm bracket according to one of the Claims 1 to 3, **characterised in that** the lever-arm sections (26, 27) of the stabilisers (10, 11) extend in driving direction and are provided with long legs and that the lever-arm sections (26, 27) of the stabilisers (10, 11) do not project beyond the marginal shadow of the vehicle.

5. Longitudinal arm bracket according to one of the Claims 1 to 4, **characterised in that** the longitudinal arm bracket (8, 9) is fastened at least to vertical webs (25) on the frame longitudinal members (2, 3) by means of bolted connections and that, in addition, the longitudinal arm bracket (8, 9) is firmly connected to the frame transverse members (20).

6. Longitudinal arm bracket according to one of the Claims 1 to 5, **characterised in that** the longitudinal arm bracket (8, 9) is associated to a tandem axle unit (1) in a commercial vehicle.

## Revendications

1. Support de bras longitudinal sur les longerons de cadre (2, 3) de véhicules industriels avec moyens servant d'appui et de fixation des bras longitudinaux (4, 5) ainsi qu'un stabilisateur (10, 11) au minimum, **caractérisé par le fait que** le support de bras longitudinal (8, 9) présente des moyens servant d'appui et de fixation de triangles de guidage et au minimum un évidement (12, 13) pour fixer de manière enveloppante par partie la zone d'extrémité d'une partie torsionnelle (28, 29) d'au minimum un stabilisateur (10, 11) positionné transversalement par rapport à l'évidement (12, 13), auquel cas l'évidement (12, 13) est combiné à un manchon d'arrêt (14, 15) enveloppant par partie le stabilisateur (10, 11) pour fixer chaque stabilisateur (10, 11) au support de bras longitudinal (8, 9).

2. Support de bras longitudinal selon la revendication 1, **caractérisé par le fait que** le stabilisateur (10, 11) est entouré dans la zone de sa fixation sur toute la surface par un élément amortisseur de forme annulaire, lequel est entouré de manière circulaire par les évidements (12, 13) concourants du support de bras longitudinal (8, 9) et des manchons d'arrêt (14, 15).

3. Support de bras longitudinal selon une des revendications 1 et 2, **caractérisé par le fait que** les évidements (12, 13) fixant par palier les stabilisateurs (10, 11) sur le support de bras longitudinal (8, 9) sont disposés en dessous des longerons de cadre (2, 3) reliés aux supports de bras longitudinal (8, 9) de telle manière que les parties torsionnelles (28, 29) des stabilisateurs (10, 11), positionnés transversalement par rapport au sens de marche, passent en dessous des longerons de cadre (2, 3).

4. Support de bras longitudinal selon une des revendications 1 à 3, **caractérisé par le fait que** les parties de bras de levier (26, 27) des stabilisateurs (10, 11), positionnées dans le sens de marche, présentent une grande longueur de côté et **par le fait que** les parties de bras de levier (26, 27) des stabilisateurs (10, 11) ne dépassent pas un bord du véhicule.

5. Support de bras longitudinal selon une des revendications de 1 à 4, **caractérisé par le fait que** le support de bras longitudinal (8, 9) est fixé au minimum à des montants verticaux (25) des longerons de cadre (2, 3) au moyen de boulons et **par le fait que** le support de bras longitudinal (8, 9) est relié de manière fixe également aux traverses de cadre (20)

6. Support de bras longitudinal selon une des revendications 1 à 5, **caractérisé par le fait que** le support de bras longitudinal (8, 9) fait partie d'un essieu tandem (1) d'un véhicule industriel.
